Europäisches Patentamt

European Patent Office

Office européen des brevets

(19)

(11) Numéro de publication: **0 273 789**
B1

(12)

# FASCICULE DE BREVET EUROPEEN

(45) Date de publication du fascicule du brevet:
29.08.90

(51) Int. Cl.⁵: **B60R 13/06,** B60J 1/17

(21) Numéro de dépôt: 87402652.9

(22) Date de dépôt: 24.11.87

(54) **Dispositif de guidage de vitre descendante.**

(30) Priorité: **28.11.86 FR 8616633**

(43) Date de publication de la demande:
**06.07.88 Bulletin 88/27**

(45) Mention de la délivrance du brevet:
**29.08.90 Bulletin 90/35**

(84) Etats contractants désignés:
**BE DE ES GB IT SE**

(56) Documents cités:
**FR-A- 2 537 928**
**FR-A- 2 551 129**
**US-A- 3 383 800**

(73) Titulaire: **REGIE NATIONALE DES USINES RENAULT,
Boîte postale 103 8-10 avenue Emile Zola,
F-92109 Boulogne-Billancourt(FR)**

(72) Inventeur: **Massie, Bernard, 24, rue d'Alsace,
F-92300 Levallois Perret(FR)**
Inventeur: **Le Ba, Fabrice, 207, rue de la Porte deTrivaux,
F-92140 Clamart(FR)**

(74) Mandataire: **Chassagnon, Jean Alain et al, 8/10, avenue
Emile Zola, F-92109 Boulogne-Billancourt(FR)**

ACTORUM AG

## Description

On connait de nombreux systèmes de guidage de vitre coulissante de véhicule automobile, notamment ceux qui font appel à un patin de retenue solidaire de la vitre coulissante, ledit patin coopérant avec une glissière montée dans la porte du véhicule, tel que le dispositif décrit dans le brevet FR-A 2 551 129. Ce dernier dispositif demande un montage très délicat, notamment en chaîne de fabrication d'automobiles. En effet, pour pouvoir monter la vitre coulissante équipée de son patin, il faut la présenter en dessous de la glissière située dans la porte du véhicule, ce qui entraîne une exigence supplémentaire dans la méthode de montage.

Le but de la présente invention est de proposer un dispositif de guidage de vitre descendante, notamment pour véhicule automobile, qui utilise un patin de retenue permettant une souplesse totale dans le montage de la vitre descendante équipée de son patin.

Selon un mode de réalisation de l'invention, le dispositif de guidage de vitre descendante, notamment pour véhicules automobiles, muni d'un patin de retenue qui est constitué de deux parois latérales enserrant les faces interne et externe de la vitre le long de sa périphérie et d'une base reliant ces deux parois latérales, ledit patin étant solidaire de la vitre descendante au moyen d'un clou de solidarisation, qui traverse ladite vitre descendante et deux parois latérales dudit patin de retenue l'une des parois étant munie, à chacune de ses extrémites, d'une partie perpendiculaire à la vitre descendante de manière à assurer la retenue de ladite vitre descendante en coopérant avec la glissière solidaire d'un montant de portière, est caractèrisè en ce que l'une des parois latérales comporte, à chacune de ses extrémités, une aile élastique qui s'écarte de ladite vitre descendante, l'aile élastique étant désolidarisée de la base et munie d'une partie perpendiculaire à la vitre descendante correspondante.

Selon une variante de l'invention, la partie perpendiculaire a une largeur variable, qui augmente de l'intérieur vers l'extérieur du patin de retenue, pour limiter le frottement lors du déplacement de la vitre descendante.

Selon un mode de réalisation de l'invention, la partie centrale de l'une des parois latérales du patin de retenue comporte un téton de positionnement, qui coopère avec un trou de même dimension aménagé dans la vitre descendante de manière à permettre un autopositionnement du patin de retenue sur ladite vitre descendante, ledit téton de positionnement ayant pour axe l'axe du trou de fixation du clou de solidarisation.

Le dispositif de guidage de vitre descendante selon l'invention présente ainsi l'avantage de pouvoir présenter la vitre équipée de son patin de retenue dans le sens le plus commode, lors du montage en chaîne de fabrication. De plus, il est possible de monter directement et sans aucun tâtonnement le patin de retenue sur la vitre et d'y engager le clou de solidarisation.

L'invention sera mieux comprise par l'étude d'un ensemble de réalisation particulier décrit à titre nullement limitatif et illustré par les dessins annexés, sur lesquels :

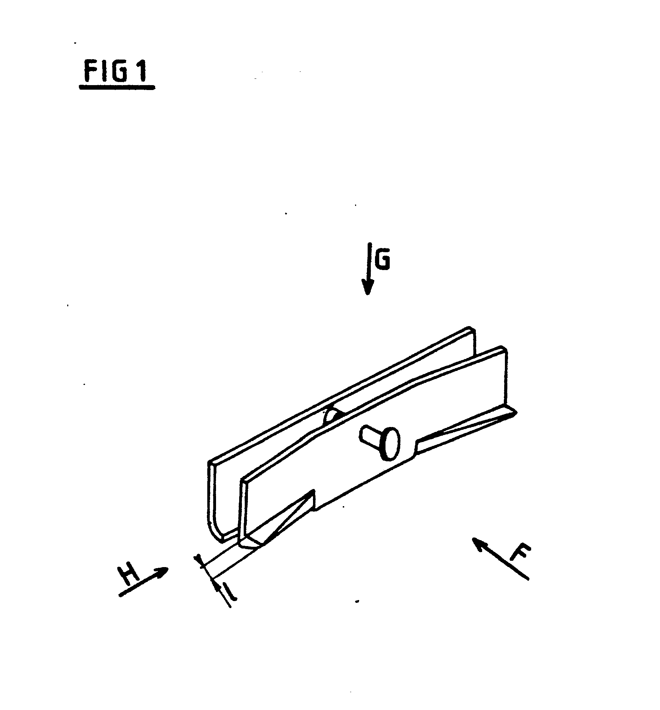

- la figure 1 est une vue en perspective cavalière du patin de retenue selon l'invention,

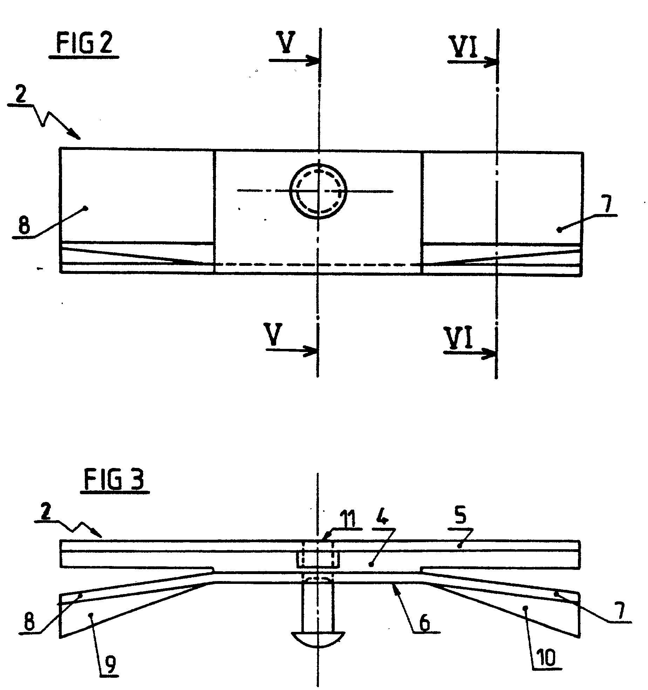

- la figure 2 est une vue suivant F de la figure 1,
- la figure 3 est une vue suivant G de la figure 1,
- la figure 4 est une vue suivant H de la figure 1,
- la figure 5 est une coupe suivant V-V de la figure 2,
- la figure 6 est une coupe suivant VI-VI de la figure 2,
- la figure 7 est une vue d'ensemble schématisée des vitres latérales d'un véhicule comportant le dispositif selon l'invention,
- la figure 8 est une coupe suivant VIII-VIII de la figure 7.

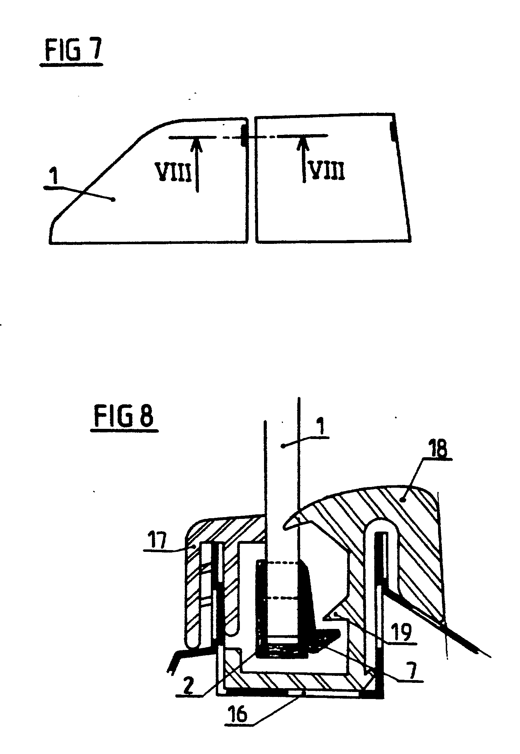

Le dispositif de guidage selon l'invention s'applique sur les vitres latérales descendantes d'un véhicule automobile, comme on peut le voir sur les figures 7 et 8. La vitre descendante 1 se déplace verticalement dans le montant de porte 16, en étant maintenue par la coulisse extérieure 17 et par la coulisse intérieure 18. De plus, la vitre descendante 1 est équipée d'un patin de retenue 2 qui coopère avec une glissière 19.

Le patin de retenue 2 est monté sur l'extrémité de la vitre descendante 1, et est solidarisé avec ladite vitre descendante 1 au moyen d'un clou de solidarisation 3. Le clou de solidarisation 3 vient s'engager dans le trou 13 réalisé dans la vitre descendante 1, et vient s'engager dans les trous 14 et 15 coaxiaux et aménagés dans la patin de retenue 2.

Le patin de retenue 2 a une section en forme de U avec deux parois latérales ou éléments adjacents 5 et 6 qui sont reliés par un fond 4 conformé suivant la figure 5.

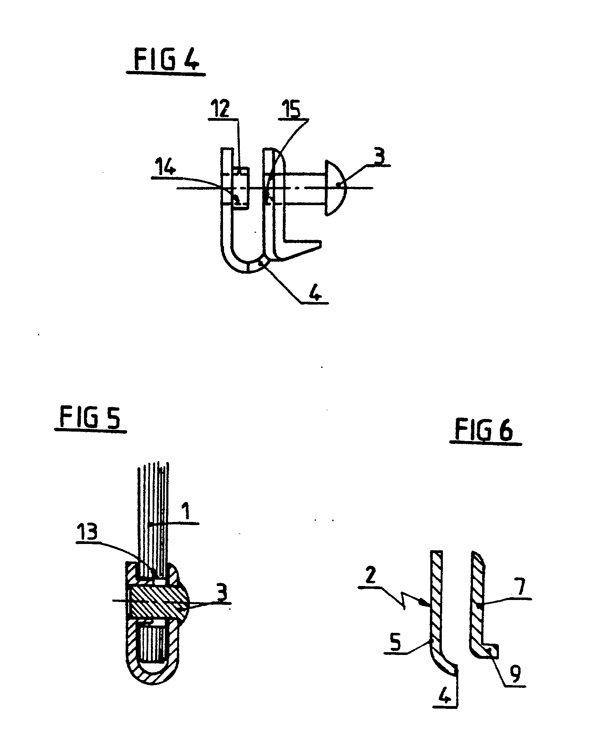

Un des éléments adjacents 6 comporte à chacune de ses extrémités une aile élastique référencée 7 et 8. Chaque aile élastique 7 et 8 s'écarte de l'élément adjacent 5 qui lui fait face, c'est-à-dire qu'elle s'écarte, après montage, de la vitre descendante 1. Chaque aile élastique 7 et 8 est désolidarisée du fond 4, comme on peut le voir sur les figures 3 et 6.

De plus, chaque aile élastique 7 et 8 est munie d'une partie perpendiculaire référencée respectivement 9 et 10. Ainsi ces parties perpendiculaires 9 et 10 sont également perpendiculaires à la vitre descendante 1 et elles coopèrent avec la glissière 19 solidaire du montant de porte 16.

Chacune des parties perpendiculaires 9 et 10 a une largeur l, qui est variable, et qui va en augmentant de l'intérieur vers l'extérieur du patin de retenue 2. Cette largeur l variable permet de limiter le frottement, lors du déplacement de la vitre descendante 1.

Afin de faciliter le montage du clou de solidarisation 3 dans la vitre ou paroi latérale descendante 1, la partie centrale 11 de l'élément adjacent 5 du patin de retenue 2 comporte un téton de positionnement 12, qui vient s'engager dans le trou 13 de même dimension qui est aménagée dans ladite vitre descendante 1. On obtient ainsi un autopositionnement du patin de retenue 2 sur la vitre descendante 1.

Le téton de positionnement 12 a le même axe que le trou de fixation 14 aménagé dans l'élément adjacent 5.

Le trou de fixation 15 aménagé dans l'élément adjacent ou paroi latérale 6, le trou de fixation 14 et le trou 13 sont ainsi alignés et il suffit alors d'engager le clou de fixation 3 dans le trou de fixation 15 pour qu'il pénètre sans difficulté et sans tâtonnement dans le trou de fixation 14, comme on peut le voir sur la figure 5.

## Revendications

1. Dispositif de guidage de vitre descendante (1), notamment pour véhicules automobiles, muni d'un patin de retenue (2), qui est constitué de deux parois latérales (5, 6) enserrant les faces interne et externe de la vitre (1) le long de sa périphérie et d,une base (4) reliant ces deux parois latérales (5, 6) ledit patin étant solidaire de la vitre descendante (1) au moyen d'un clou de solidarisation (3), qui traverse ladite vitre descendante (1) et les deux parois latérales (5) et (6) dudit patin de retenue (2), l'une des parois (5, 6) latérales étant munie, à chacune de ses extrémités, d'une partie perpendiculaire (9, 10) à la vitre descendante (I) de manière à assurer la retenue de ladite vitre descendante (1) en coopérant avec la glissière solidaire d'un montant de portière, caractérisé en ce que l'une (6) des parois latérales qui comporte, à chacune de ses extrémités, une aile élastique (7, 8) qui s'écarte de ladite vitre descendante (1), l'aile élastique (7, 8) étant désolidarisée de la base (4) et munie d'une partie perpendiculaire (9, 10) à la vitre descendante (1) correspondante.

2. Dispositif de guidage selon la revendication 1, caractérisé en ce que la partie perpendiculaire (9, 10) a une largeur variable, qui augmente de l'intérieur vers l'extérieur du patin de retenue(2), pour limiter le frottement lors du déplacement de la vitre descendante (1).

3. Dispositif de guidage selon la revendication 1, caractérisé en ce que la partie centrale (11) l'une des parois latérales de l'un des éléments adjacents (5) du patin de retenue (2) comporte un téton de positionnement (12), qui coopère avec un trou (13) de même dimension aménagé dans la vitre descendante (1) de manière à permettre un autopositionnement du patin de retenue (2) sur ladite vitre descendante (1), ledit téton de positionnement (12) ayant pour axe l'axe du trou de fixation (14) du clou de solidarisation (3).

## Patentansprüche

1. Führungsvorrichtung für eine versenkbare Scheibe (1), insbesondere für Kraftfahrzeuge, mit einer Halteschiene (2), die aus zwei Seitenwänden (5, 6) besteht, welche die Innenseite und die Außenseite der Scheibe entlang des Umfangs einklemmenund aus einem Grundteil (4) besteht, das die beiden Seitenwände (5, 6) verbindet, wobei die Schiene mit der Scheibe (1) mittels eines Befestigungsbolzens (3) fest verbunden ist, der die Scheibe und die beiden Seitenwände der Halteschiene (2) durchsetzt und wobei eine der Seitenwände (5, 6) an jedem ihrer Enden mit einem sich senkrecht zur Scheibe (1) erstreckenden Teil (9, 10) derart versehen ist, daß eine Halterung der versenkbaren Scheibe (1) in Zusammenwirken mit einer Gleitführung gewährleistet ist, welche mit einer Türstütze fest verbunden ist, dadurch gekennzeichnet, daß eine (6) der Seitenwände an jedem ihrer Enden einen elastischen Flansch (7, 8) aufweist, der der Scheibe abgewandt ist, wobei der Flansch (7, 8) vom Grundteil (4) getrennt ist und ein sich zur zugehörigen versenkbaren Scheibe (1) senkrecht erstreckendes Teil (9, 10) aufweist.

2. Führungsvorrichtung nach Anspruch 1, dadurch gekennzeichnet, daß das senkrechte Teil (9, 10) eine variable Breite aufweist, die vom Inneren der Halteschiene (2) zum Äußeren hin zunimmt, um die Reibung während des Verschiebens der versenkbaren Scheibe (1) zu begrenzen.

3. Führungsvorrichtung nach Anspruch 1, dadurch gekennzeichnet, daß der zentrale Abschnitt (11) einer der Seitenwände (5) der Halteschiene (2) einen Positionierzapfen (12) aufweist, der mit einer Öffnung (13) gleicher Abmessung zusammenwirkt, die in der versenkbaren Scheibe (1) derart vorgesehen ist, daß eine Selbstpositionierung der Halteschiene (2) an der versenkbaren Scheibe (1) ermöglicht wird, wobei die Achse des Positionierzapfens (12) mit der Achse der Befestigungsöffnung (14) des Befestigungsbolzens (3) zusammenfällt.

## Claims

1. A lowerable window (1) guide arrangement, in particular for motor vehicles, provided with a retaining slider (2) which is formed by two side walls (5, 6) gripping the internal and external faces of the window (1) along its periphery and a base (4) connecting said two side walls (5, 6), said slider being fixed with respect to the lowerable window (1) by means of a securing pin (3) which passes through said lowereable window (1) and the two side walls (5 and 6) of said retaining slider (2), one of the side walls (5, 6) being provided at each of its ends with a portion (9, 10) which is perpendicular to the lowerable window (1) in such a way as to ensure retention of said lowerable window (1), while co-operating with the sliding guide which is fixed with respect to a door upright, characterised in that one (6) of the side walls comprises at each of its ends a resilient limb (7, 8) which goes away from said lowerable window (1), the resilient limb (7, 8) being separated from the base (4) and being provided with a portion (9, 10) which is perpendicular to the corresponding lowerable window (1).

2. A guide arrangement according to claim 1 characterised in that the perpendicular portion (9, 10) is of a variable width which increases from the interior outwardly of the retaining slider (2) to limit the friction which occurs upon displacement of the lowerable window (1).

3. A guide arrangement according to claim 1 characterised in that the central portion (11) of one of the side walls (5) of the retaining slider (2) comprises a positioning lug (12) co-operating with a hole (13) of the same dimension provided in the lowerable window (1) so as to permit self-positioning of the retaining slider (2) on said lowerable window (1), said positioning lub (12) having as its axis the axis of the fixing hole (14) for the securing pin (3).

## FIG 1

FIG 2

FIG 3

EP 0 273 789 B1

FIG 4

12   15

14                 3

4

FIG 5

1

13

3

FIG 6

2         7

5

9

4

## FIG 7

## FIG 8